Europäisches Patentamt

European Patent Office

Office européen des brevets

(19)

(11) Publication number: **0 060 586**
**B1**

(12) **EUROPEAN PATENT SPECIFICATION**

(45) Date of publication of patent specification: **13.08.86**

(21) Application number: **82200243.2**

(22) Date of filing: **26.02.82**

(51) Int. Cl.⁴: **H 01 J 9/24,** C 03 B 25/00,
H 01 J 9/38

(54) Method of manufacturing a display tube.

(30) Priority: **16.03.81 NL 8101263**

(43) Date of publication of application:
**22.09.82 Bulletin 82/38**

(45) Publication of the grant of the patent:
**13.08.86 Bulletin 86/33**

(84) Designated Contracting States:
**DE FR GB IT NL**

(56) References cited:
**NL-A-6 615 265**
**US-A-2 754 628**
**US-A-2 956 373**
**US-A-3 493 356**
**US-A-3 894 858**
**US-A-4 152 036**

(73) Proprietor: **N.V. Philips' Gloeilampenfabrieken**
**Groenewoudseweg 1**
**NL-5621 BA Eindhoven (NL)**

(72) Inventor: **Stöver, Johannes Hinderikus**
**c/o INT. OCTROOIBUREAU B.V. Prof. Holstlaan 6**
**NL-5656 AA Eindhoven (NL)**
Inventor: **van Leeuwen, Johannes Aloysius**
**c/o INT. OCTROOIBUREAU B.V. Prof. Holstlaan 6**
**NL-5656 AA Eindhoven (NL)**

(74) Representative: **Peters, Rudolf Johannes et al**
**INTERNATIONAAL OCTROOIBUREAU B.V. Prof.**
**Holstlaan 6**
**NL-5656 AA Eindhoven (NL)**

Courier Press, Leamington Spa, England.

# Description

The invention relates to a method of manufacturing a display tube comprising a cone and a display screen having a peripheral flange portion, in which the display screen and the cone are subjected to temperature treatments during which measures are taken to reduce stresses occurring in the display screen by minimizing differences in thermal expansion between the tube's outer and inner surfaces during the warming-up part of the temperature treatments by means of a heat shield. The term "display screen" is meant to be understood herein the glass window portion of the tube.

A display tube is usually composed of a display screen and a cone which are adhered together. For this purpose, a glass frit is provided on the edge of the cone. In a so-called adhering jig the display screen is placed on the cone while positioned accurately. The cone with the display screen are then passed through a furnace in which the glass frit recrystallizes during a fixed temperature range so that the display screen and the cone are joined rigidly and in a vacuum-tight manner.

After connecting the electron gun in the neck of the display tube, the display tube is evacuated while heating. During pumping, the display tube is passed through a furnace in which the display tube is degassed while it traverses a fixed temperature range. During the cooling process the tube is sealed in a vacuum-tight manner.

A method of the kind mentioned in the opening paragraph is described in NL—A 66.15.265. In order to avoid the occurrence of temperature differences between the cone and display screen of the cathode ray tube during a thermal treatment thereof, it is suggested to provide a heat reflective layer onto the cone by spraying a mixture of powdered aluminium and a suitable carrier material.

United States Patent 4,152,036 discloses a method for reducing stresses occurring in the display screen during vacuum pumping of the display tube. These stresses are caused by the temperature difference and by the pressure differential between the outside and the inside of the display tube and may cause fracture of the display tube. In order to counteract the stresses a mechanical pressure is exerted on parts of the periphery, in particular the corners of the display screen. For that purpose, a display tube is placed in a jig which has four arms which are secured approximately in their centres to the jig so as to be rotatable. At one end the arms are connected to a ring and at their other end they engage at the corners of the display screen. When the ring expands the arms rotate so that the ends exert a pressure on the corners of the display screen which is proportional to the temperature of the display tube.

However, the jig is of a complicated construction which thus is less suitable for use in mass production.

Moreover, the jig is not suitable for being used in adhering the display screen to the cone.

For a better understanding, the occurrence of stresses in the display screen during the various temperature treatments will now first be described in greater detail.

Upon adhering the display screen to the cone a temperature difference occurs between the outside and the inside of a tube, which results in tensile stresses in the tube. As a result of the temperature difference between the inside and the outside, the display screen will dome so that the peripheral flange portion of the display screen is drawn inwardly. Due to the larger rigidity the corners of the display screen are drawn inwardly to a comparatively smaller extent than the centres of the sides of the peripheral flange portion of the display screen. This causes tensile stresses in the corners of the display screen which are added to the tensile stresses which are caused by the temperature difference between the outside and the inside of a corner of the display screen.

It has furthermore been found that in colour display tubes in which a colour selection electrode is suspended from suspension means connected in the corners of the display screen, said suspension means cause extra tensile stresses in the corners of the display screen. These extra tensile stresses in such display tubes result in a larger percentage of fracture than in display tubes in which the colour selection electrode, as is usual nowadays, is suspended from suspension means connected in the centres of the sides of the peripheral flange portion of the display screen.

Upon vacuum pumping the display tube, the above tensile stresses also occur. These tensile stresses, however, are larger due to the warming-up speed which is faster as compared with the speed of adhesion. These larger tensile stresses are partly compensated for by the compressive stresses occurring as a result of the vacuum pumping, which stresses are directed opposite to the tensile stresses.

The tensile stresses occurring during adhering and vacuum pumping the display tube cause a percentage of fractures which cause considerable losses, in particular in colour display tubes in which the colour selection electrode is suspended in the corners of the display screen. It is therefore the object of the invention to provide a method of manufacturing a display tube in which fracture of the display tube during temperature treatments of the display tube is substantially avoided in a simple manner.

A method of manufacturing a display tube comprising a cone and a display screen having a peripheral flange portion, in which the display screen and the cone are subjected to temperature treatments during which measures are taken to reduce stresses occurring in the display screen by minimizing differences in thermal expansion between the tube's outer and inner surfaces during the warming-up part of the temperature treatments by means of a heat shield, is characterized according to the invention in that the heat shield is provided on or at some distance from the central part of the display screen.

The invention is based on the recognition of the fact that it has proved possible to reduce the occurrence of stresses in the display screen considerably by locally varying the temperature of the display tube and that the reduced stresses reduce the possibility of fracture of the tube parts.

By means of the heat shield, the central part of the display screen upon travelling the temperature range is heated at a slower rate than the remaining parts of the display tube. During the warming-up of the display tube, heated air is as a matter of fact guided from the neck past the display tube. By providing a heat shield at some distance from the display screen, fewer turbulences occur at the central part of the display screen so that said part is warmed up less rapidly. Alternatively, a heat shield of a poorly heat conducting material may be placed on the central part of the display screen so that the central part of the display screen is warmed up less rapidly. By providing a heat shield on or at some distance from the display screen, a smaller temperature difference occurs between the outside and the inside of the display screen. As a result of this the extent of doming of the display screen will be smaller so that the tensile stresses in the corners of the display screen are reduced. As a result of this the possibility of fracture is also reduced. The heat shield may be used both during adhering the display screen to the cone and during evacuating the display tube. The heat shield may comprise a pattern of apertures. This pattern is preferably such that the transmission of the heat shield increases proceeding from the centre towards the edge of the heat shield. As a result of the pattern of apertures a uniform temperature distribution occurs over the display screen.

These embodiments may be further characterized in that the heat shield is provided around the whole display screen, and engages the peripheral flange portion of the display screen. As a result of the heat shield no heated air flows past the display screen so that the display screen is warmed up less rapidly than the cone.

According to another embodiment of the invention a method of manufacturing a display tube comprising a cone and a display screen having a peripheral flange portion, in which the display screen and the cone are subjected to temperature treatments in a furnace during which measures are taken to reduce stresses occurring in the display screen, by minimizing differences in thermal expansion between the tube's outer and inner surfaces during the warming-up part of the temperature treatments is characterized in that the display screen is additionally heated by means of thermal radiation. By warming up the display screen substantially with thermal radiation instead of with heated air, a smaller temperature gradient occurs over the display screen. As a result of this the extent of doming of the display screen will be smaller so that the tensile stresses in the corners of the display screen are reduced, as a result of which the possibility of fracture is also reduced. The heating of the display screen with thermal radiation may be used both during adhering the display screen to the cone and during evacuating the display tube.

The invention will now be described in greater detail, by way of example, with reference to the accompanying drawings, in which

Figure 1 is a diagrammatic sectional view of a colour display tube,

Figure 2 is a perspective view of a corner of the display screen of the tube shown in Figure 1,

Figures 3a to 3c explain a first embodiment of a method in accordance with the invention for joining the display screen to the cone,

Figure 4 explains a further embodiment of a method in accordance with the invention for evacuating the display tube,

Figure 5 explains another embodiment of a method in accordance with the invention,

Figure 6 explains still another embodiment of a method in accordance with the invention.

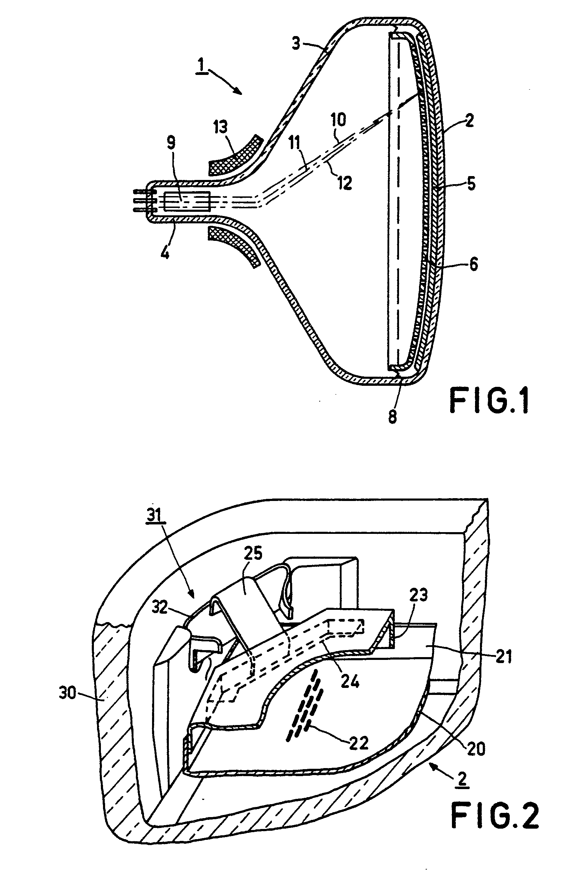

The display tube shown in Figure 1, in this case a colour display tube, is formed by a glass envelope 1 which has a substantially rectangular display screen 2, a cone 3 and a neck 4. A pattern of phosphors 5 luminescing in the colours red, green and blue is provided on the display screen 2. At a short distance from the display screen 2 a colour selection electrode 6 having a large number of apertures is suspended by means of diagrammatically shown suspension means 8 connected in the corners of the peripheral flange portion. A system 9 of electron guns is mounted in the neck 4 of the tube to generate three electron beams 10, 11 and 12. These beams are deflected by means of a system 13 of deflection coils placed around the tube and intersect each other substantially at the level of the colour selection electrode 6, after which each of the electron beams impinges upon one of the three phosphors provided on the display screen 2.

Figure 2 shows for explanation a perspective view of the suspension of the colour selection electrode in a corner of the display screen. This suspension is known *per se* from United States Patent Specification 2,548,235. The colour selection electrode is formed by a mask sheat 20 having a large number of apertures 22 and a peripheral flange portion 21. A diaphragm 23 is connected to the peripheral flange portion 21. A flat resilient element 25 which extends substantially perpendicularly to the electron beams deflected towards the corner of the display window is connected to a supporting strip 24 connected in the corner of the diaphragm 23. A chamber-like recess 31 in which a clamping spring 32 is provided is present in the corner of the peripheral flange portion 30 of the display screen 2. The flat resilient element 25 is connected to said clamping spring 32.

It is to be noted that the invention is suitable not only for the above-described type of colour display tubes but may also be used in other types of colour display tubes and in black-and-white display tubes.

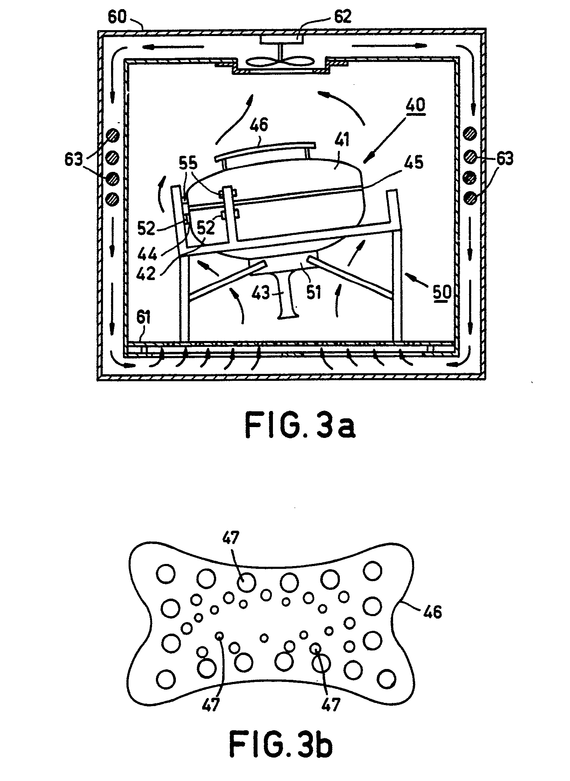

A first embodiment of a method in accordance with the invention will be described with reference to Figures 3a to 3c. Figure 3a shows diagrammatically and partly as a sectional view a compartment of a furnace 60 in which the display tube 40 is placed in a so-called adhering jig 50. The display tube 40 is composed of a display screen 41, a cone 42 and a neck 43. Neck 43 and cone 42 were sealed together already in an earlier stage. The cone 42 has along its circumference three reference studs 44 one of which is visible in Figure 3a. A glass frit 45 is provided on the edge of the cone 42 for joining the display screen 41 to the cone 42. The cone 42 is placed in the adhering jig 50 in which the cone 42 engages the ring 51 near the neck 43. With the three reference studs 44 the cone 42 engages three abutments 52 of the adhering jig 50, two of which are visible in Figure 3a. The display screen 41 is placed on the edge of the cone 42, the display screen 41 also engaging three abutments 55 on the adhering jig 50 only two of which are also visible in Figure 3a. In order to ensure a ready engagement of the display screen 41 and the cone 42 against the abutments, the adhering jig has been constructed so as to be tilted slightly in two directions. Before entering the adhering furnace 60 a heat shield 46 is placed at a short distance from the central part of the display screen 41. Figure 3b is a plan view of the heat shield 46. The heat shield 46 has a large number of apertures 47. The size of the apertures 47 increases proceeding from the centre towards the edge of the heat shield. As a result of said pattern of apertures 47 the shielding effect decreases gradually from the centre towards the edge.

The adhering jig 50 with the display tube 40 placed therein is positioned on an apertures transport belt 61 with which the display tube 40 is passed through the furnace. The furnace is divided into a number of compartments 60. In each compartment air is drawn-in by a fan 62 and is conveyed past the heating elements 63. This heated air is conveyed past the tube 40 on the lower side *via* the apertures in the transport belt 61. In the furnace the display tube 40 is heated to approximately 425°C. At approximately 400°C the glass frit 45 recrystallizes so that the display screen 41 and the cone 42 are rigidly connected together in a vacuum-tight manner.

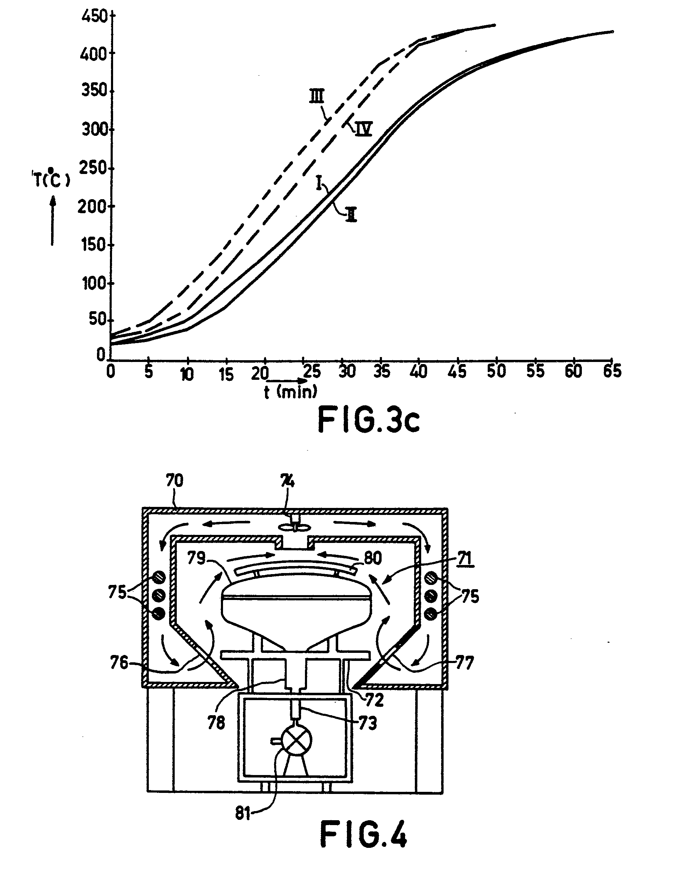

As a result of the heat shield 46, fewer turbulences occur in the central part of the display screen 41 so that this part is warmed up less rapidly. Figure 3c shows the variation of the temperature T(°C) of the outside and inside of the display screen 41 during passing through the adhering furnace as a function of the t(min.) with and without the use of a heat shield 46. The lines I and II denote the temperature of the outside and the inside, respectively, of the display screen 41 while using the heat shield 46, and the broken lines III and IV denote the temperature of the outside and the inside, respectively, of the display screen 41 without the use of the heat shield 46. As shown in Figure 3c a smaller temperature difference between the outside and the inside of the display screen 41 occurs when the heat shield 46 is used. The maximum temperature difference without the use of the heat shield is approximately 35°C, while the maximum temperature difference with the use of the heat shield is approximately 25°C. As a result of the smaller temperature difference the extent of doming of the display screen 41 is smaller so that the tensile stress in the corners of the display screen 41 and hence also the possibility of fracture of the display tube 40 are considerably reduced.

Such a heat shield is also very suitable for use in evacuating the display tube. After adhering the display screen to the cone the electron gun system is sealed with the neck of the display tube, after which the display tube is evacuated. Figure 4 is a diagrammatic partial sectional view of a compartment 70 in the furnace for evacuating the display tube 71. The display tube 71 is placed in a holder 72 and a pump 81 is connected to the exhaust tube 73 of the tube 71. In the furnace the display tube 71 is warmed up to approximately 360°C so as to liberate the residual gases from the tube so as to obtain a good vacuum in the tube 71. The tube 71 is warmed up in the furnace by means of heated air which is drawn-in by a fan 74 provided on the upper side of the compartment 70, is then conveyed past heating elements 75 and past the tube 71 from the neck 78 *via* inflow apertures 76 and 77. Prior to being introduced into the furnace, a heat shield 80 having the same shape as the heat shield shown in Figure 3b is placed at a short distance above the central part of the display screen 79. As a result of the heat shield 80 fewer turbulences occur of the air flowing past the display screen 79 so that the display screen 79 is warmed up less rapidly than the remaining parts of the display tube 71. The maximum temperature difference between the outside and the inside of the display screen 79 with the use of the heat shield 80 is approximately 30°C, while the maximum temperature difference is approximately 40°C without the use of the heat shield. It is to be noted that the maximum occurring temperature differences upon evacuating the display tube are larger than upon adhering the display screen to the cone, which is caused by the comparatively more rapid warming up of the display tube upon evacuating. As a result of the heat shield 80 a smaller temperature difference occurs between the outside and the inside of the display screen 79. As a result of this a smaller extent of doming of the display screen 79 occurs so that the tensile stress in the corners of the display screen 79 which is the resultant of the tensile stress caused by the doming and the compressive stress occurring by the pressure difference and directed opposite to the tensile stress is considerably reduced.

Instead of a heat shield which is provided at some distance above the central part of the display screen, a heat shield of a poorly heat conducting material may also be provided on the display screen upon adhering and evacuating. As a result of this the display screen is also warmed up more slowly so that the occurring tensile stresses are reduced again.

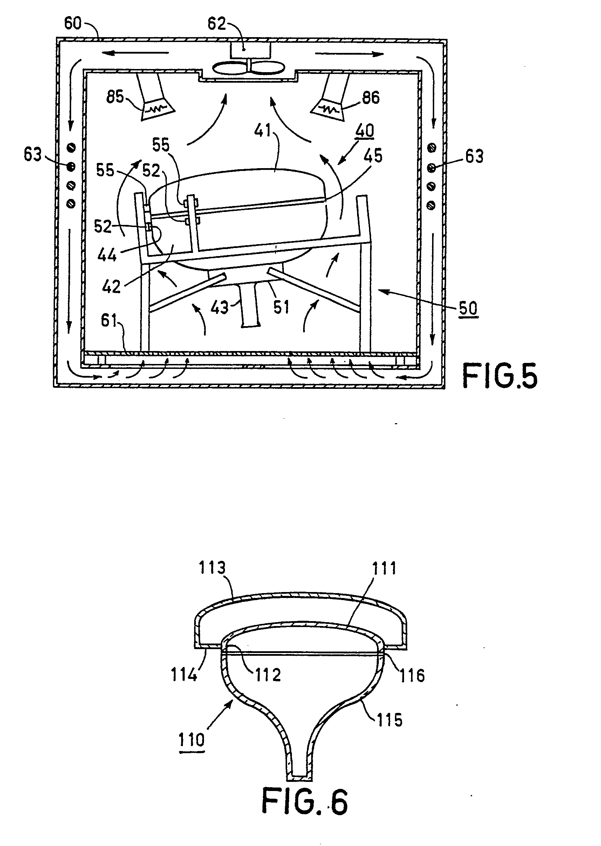

A second embodiment will be described in greater detail with reference to Figure 5. The figure shows a compartment of the furnace for adhering the display screen to the cone. Similar components are referred to by the same reference numerals as in Figure 3a. Above the display screen 41 two infra-red lamps 85 and 86 are connected with which the display screen 41 is extra radiated during warming up upon adhering. As a result of the thermal radiation a smaller temperature difference will occur between the outside and the inside of the display screen 41. As a result of this less doming of the display screen 41 will occur. The tensile stresses in the corners of the display screen 41 are thus reduced so that the possibility of fracture of the display tube is also reduced. The warming up of the display screen by means of thermal radiation may also be used upon evacuating the display tube.

In Figure 6 which is a diagrammatic sectional view of a display tube 110, a heat shield 113 is provided over the whole display tube 111 and has its edge 114 engaging the peripheral flange portion 112 of the display screen 111. With the heat shield 113 the display tube 110 is passed through an adhering furnace as shown in Figure 3a. As a result of the heat shield 113 the cone 115 is warmed up more rapidly than the display screen 111 so that the cone 115 will expand more than the display screen 111. In this condition the glass frit 116 recrystallizes at approximately 400°C so that the display screen 111 and the cone 115 are secured together in this position. After cooling and shrinkage of the display tube 110 the corners of the cone 115 exert compressive stresses on the corners of the display screen 111. The compressive stresses compensate for the greater part for the tensile stresses occurring upon evacuating the display tube 110. The possibility of fracture during evacuating the display tube is thus considerably reduced.

## Claims

1. A method of manufacturing a display tube (40) comprising a cone (41) and a display screen (41) having a peripheral flange portion, in which the display screen and the cone are subjected to temperature treatments in a furnace (60) during which measures are taken to reduce stresses occurring in the display screen by minimizing differences in thermal expansion between the tube's outer and inner surfaces during the warming-up part of the temperature treatments by means of a heat shield (46) characterized in that the heat shield is provided on or at some distance from the central part of the display screen.

2. A method as claimed in Claim 1, characterized in that the heat shield has a pattern of apertures.

3. A method as claimed in Claim 2, characterized in that the pattern of apertures is such that the transmission of the heat shield increases proceeding from the centre towards the edge of the heat shield.

4. A method as claimed in Claim 1, 2 or 3, characterized in that said heat shield extends across substantially the entire outer surface of the display screen.

5. A method as claimed in Claim 4, characterized in that said heat shield engages the peripheral flange portion of the display screen.

6. A method of manufacturing a display tube (40) comprising a cone (41) and a display screen (41) having a peripheral flange portion, in which the display screen and the cone are subjected to temperature treatments in a furnace during which measures are taken to reduce stresses occurring in the display screen by minimizing differences in thermal expansion between the tube's outer and inner surfaces during the warming-up part of the temperature treatments characterized in that the display screen (41) is additionally heated by means of thermal radiation.

## Patentansprüche

1. Verfahren zur Herstellung einer Bildwiedergaberöhre (40) mit einem Konus (42) und einem Bildwiedergabeschirm (41) mit peripherem Flanschteil, wobei der Bildwiedergabeschirm und der Konus Temperaturbehandlungen in einem Ofen (60) erfahren, bei denen Massnahmen zu Reduzieren von Spannungen im Bildwiedergabeschirm durch Verringerung von Unterschieden in der Wärmeausdehnung zwischen den äusseren und inneren Röhrenoberflächen während der Aufheizphase der Temperaturbehandlungen mittels eines Wärmeschildes (46) getroffen werden, dadurch gekennzeichnet, dass der Wärmeschild auf oder in einigem Abstand von dem zentralen Teil des Bildwiedergabeschirmes vorgesehen ist.

2. Verfahren nach Anspruch 1, dadurch gekennzeichnet, dass der Wärmeschild ein Lochmuster aufweist.

3. Verfahren nach Anspruch 2, dadurch gekennzeichnet, dass das Lochmuster derart ist, dass die Übertragung des Wärmeschildes von der Mitte nach dem Rand des Wärmeschildes ansteigt.

4. Verfahren nach Anspruch 1, 2 oder 3, dadurch gekennzeichnet, dass dieser Wärmeschild sich im wesentlichen über die ganze Aussenfläche des Bildwiedergabeschirmes erstreckt.

5. Verfahren nach Anspruch 4, dadurch gekennzeichnet, dass der Wärmeschild am peripheren Flanschteil des Bildwiedergabeschirmes anliegt.

6. Verfahren zur Herstellung einer Bildwiedergaberöhre (40) mit einem Konus (42) und einem Bildwiedergabeschirm (41) mit peripherem Flanschteil, wobei der Bildwiedergabeschirm und der Konus Temperaturbehandlungen in einem Ofen erfahren, bei denen Massnahmen zum Reduzieren von Spannungen im Bildwiedergabeschirm durch Verringerung von Unterschieden in der Wärmeausdehnung zwischen den äusseren und inneren Röhrenoberflächen während der Aufheizphase der Temperaturbehandlungen getroffen werden, dadurch gekennzeichnet, dass der Bildwiedergabeschirm (41) mit Hilfe von Wärmestrahlung zusätzlich geheizt wird.

## Revendications

1. Procédé pour la réalisation d'un tube image (40), comportant un écran image (41) muni d'un rebord relevé et un cône (42), l'écran image et le cône étant soumis à des traitements thermiques dans un four (60), lors desquels des mesures ont été prises pour réduire les tensions se produisant dans l'écran image par réduction au minimum des différences de dilatation thermique entre les surfaces extérieure et intérieure du tube pendant la partie de réchauffage des traitements thermiques à l'aide d'un écran thermique (46), caractérisé en ce que l'écran thermique est appliqué sur ou à quelque distance de la partie centrale de l'écran image.

2. Procédé selon la revendication 1, caractérisé en ce que l'écran thermique présente une configuration d'ouvertures.

3. Procédé selon la revendication 2, caractérisé en ce que la transmission de l'écran thermique augmente à partir du centre vers le bord de l'écran thermique.

4. Procédé selon la revendication 1, 2 ou 3 caractérisé en ce que ledit écran thermique s'étend sur pratiquement toute la surface extérieure de l'écran image.

5. Procédé selon la revendication 4, caractérisé en ce que ledit écran thermique s'applique contre la partie de rebord périphérique de l'écran image.

6. Procédé pour la réalisation d'un tube image 40 comportant un cône 42 et un écran image 41 muni d'une partie de rebord périphérique, dans lequel l'écran image et le cône sont soumis à des traitements thermiques dans un four, lors desquels des mesures ont été prises pour réduire les tensions se produisant dans l'écran image par réduction au minimum des différences de dilatation thermique entre les surfaces extérieure et intérieure du tube pendant la parties de chauffage des traitements thermiques, caractérisé en ce que l'écran image est en outre chauffé par rayonnement thermique.

0 060 586

FIG.1

FIG.2

**FIG. 3a**

**FIG. 3b**

0 060 586

FIG.3c

FIG.4

0 060 586

FIG.5

FIG.6

4